# EUROPEAN PATENT SPECIFICATION

(11) **EP 4 183 644 B1**
(45) Date of publication and mention of the grant of the patent: **17.07.2024**
(21) Application number: 22208473.3
(22) Date of filing: 21.11.2022
(51) Int. Cl.: B60T 8/1755

(54) **CONTROL METHOD AND SYSTEM FOR BRAKING BACKUP IN AUTONOMOUS DRIVING**
STEUERUNGSVERFAHREN UND -SYSTEM ZUR BREMSSICHERUNG BEIM AUTONOMEN FAHREN
PROCÉDÉ ET SYSTÈME DE COMMANDE D'AIDE AU FREINAGE EN CONDUITE AUTONOME

(30) Priority: 23.11.2021 CN 202111393666
(43) Date of publication of application: 24.05.2023
(73) Proprietor: Nio Technology (Anhui) Co., Ltd, Hefei City, Anhui 230601 (CN)
(72) Inventor: ZHANG, Xianhui, Hefei, Anhui 230601 (CN); TEOBALDI, Danilo, Hefei, Anhui 230601 (CN); XIAO, Bohong, Hefei, Anhui 230601 (CN); YUAN, Da, Hefei, Anhui 230601 (CN); ZHANG, Tong, Hefei, Anhui 230601 (CN); WANG, Baotian, Hefei, Anhui 230601 (CN)
(74) Representative: Vossius & Partner Patentanwälte Rechtsanwälte mbB

(56) References cited:
- CN-A- 106 379 314
- CN-A- 110 254 412
- US-A1- 2003 163 237
- US-A1- 2007 185 633
- US-A1- 2018 194 353
- US-A1- 2018 201 140
- US-A1- 2021 078 556
- US-A1- 2021 122 343

## Description

### Technical Field

The invention relates to the field of vehicle control, and more specifically, to a control method and system for braking backup in autonomous driving, a computer storage medium, a computer device, and a vehicle.

### Background Art

As people constantly pursue safe and comfortable driving experience, autonomous driving technologies have become a new development trend of automobiles. The autonomous driving technologies rely on collaboration of computer vision, radars, monitoring apparatuses, global positioning systems, etc., to enable operations such as autonomous driving, steering, and braking of vehicles without active intervention of humans.

In the process of autonomous driving control, since an autonomous driving system completely controls a vehicle, there are very high safety requirements for the vehicle control, especially for safety requirements for a braking system. At present, a commonly used method for ensuring the safety of the braking system is to add hardware to the vehicle and use a dual-line braking system at the same time, so as to ensure that the braking is not lost. However, this method has a high cost and difficult in arrangement, and the same braking lines cannot be controlled completely independently of each other. In addition, a vehicle not installed with any dual-line braking system is difficult to upgrade to be equipped with a braking system with advanced autonomous driving capabilities.

US 2007/185633 A1 discloses a state of the art control method for braking system in autonomous driving, comprising receiving a status indication of a function module associated with stability control and assigning a braking command based on the received status indication.

### Summary of the Invention

In order to solve or at least alleviate one or more of the above problems, the following technical solutions are provided.

According to a first aspect of the invention, there is provided a control method for braking backup in autonomous driving, including: receiving a status indication of an execution module associated with braking and a status indication of a function module associated with stability control; determining, based at least in part on the received status indication of the execution module associated with braking and the received status indication of the function module associated with stability control, a braking capability of the execution module associated with braking; and assigning a braking command based at least in part on the received status indication of the execution module associated with braking and the determined braking capability of the execution module associated with braking.

The control method for braking backup in autonomous driving according to an embodiment of the invention further includes: performing vehicle stability control based at least in part on the received status indication of the execution module associated with braking.

In the control method for braking backup in autonomous driving according to an embodiment of the invention or any of the above embodiments, the execution module associated with braking includes one or more of the following: a hydraulic braking module, a motor torque response module, and an electronic parking module.

In the control method for braking backup in autonomous driving according to an embodiment of the invention or any of the above embodiments, the determined braking capability of the execution module associated with braking includes one or more of the following: a hydraulic braking torque capability, a negative motor torque capability, and dynamic clamping braking torque.

In the control method for braking backup in autonomous driving according to an embodiment of the invention or any of the above embodiments, the assigning a braking command based at least in part on the received status indication of the execution module associated with braking and the determined braking capability of the execution module associated with braking further includes: instructing, in response to the received status indication of the execution module associated with braking, the hydraulic braking module to be in a first state to perform braking using negative motor torque, wherein hydraulic braking torque is used for the braking when the negative motor torque is insufficient.

In the control method for braking backup in autonomous driving according to an embodiment of the invention or any of the above embodiments, the assigning a braking command based at least in part on the received status indication of the execution module associated with braking and the determined braking capability of the execution module associated with braking further includes: instructing, in response to the received status indication of the execution module associated with braking, the hydraulic braking module to be in a second state to perform braking using hydraulic braking torque.

In the control method for braking backup in autonomous driving according to an embodiment of the invention or any of the above embodiments, the assigning a braking command based at least in part on the received status indication of the execution module associated with braking and the determined braking capability of the execution module associated with braking further includes: instructing, in response to the received status indication of the execution module associated with braking, the hydraulic braking module to be in a third state to perform braking using negative motor torque, where dynamic clamping braking torque is used for the braking when the negative motor torque is insufficient.

In the control method for braking backup in autonomous driving according to an embodiment of the invention or any of the above embodiments, the performing vehicle stability control based at least in part on the received status indication of the execution module associated with braking further includes: instructing, in response to the received status indication of the execution module associated with braking, the hydraulic braking module to be in a first state to control hydraulic braking torque and negative motor torque using the function module associated with stability control in the hydraulic braking module.

In the control method for braking backup in autonomous driving according to an embodiment of the invention or any of the above embodiments, the performing vehicle stability control based at least in part on the received status indication of the execution module associated with braking further includes: instructing, in response to the received status indication of the execution module associated with braking, the hydraulic braking module to be in a second state to control hydraulic braking torque using the function module associated with stability control in a vehicle control unit.

In the control method for braking backup in autonomous driving according to an embodiment of the invention or any of the above embodiments, the performing vehicle stability control based at least in part on the received status indication of the execution module associated with braking further includes: instructing, in response to the received status indication of the execution module associated with braking, the hydraulic braking module to be in a third state to control negative motor torque and an anti-lock sub-module in an electronic parking module using the function module associated with stability control in a vehicle control unit.

According to a second aspect of the invention, there is provided a control system for braking backup in autonomous driving, including: a receiving unit configured to receive a status indication of an execution module associated with braking and a status indication of a function module associated with stability control; a determining unit configured to determine, based at least in part on the received status indication of the execution module associated with braking and the received status indication of the function module associated with stability control, a braking capability of the execution module associated with braking; and an assignment unit configured to assign a braking command based at least in part on the received status indication of the execution module associated with braking and the determined braking capability of the execution module associated with braking.

The control system for braking backup in autonomous driving according to an embodiment of the invention further includes: a stability control unit configured to perform vehicle stability control based at least in part on the received status indication of the execution module associated with braking.

In the control system for braking backup in autonomous driving according to an embodiment of the invention or any of the above embodiments, the assignment unit is further configured to instruct, in response to the received status indication of the execution module associated with braking, the hydraulic braking module to be in a first state to perform braking using negative motor torque, where hydraulic braking torque is used for the braking when the negative motor torque is insufficient.

In the control system for braking backup in autonomous driving according to an embodiment of the invention or any of the above embodiments, the assignment unit is further configured to instruct, in response to the received status indication of the execution module associated with braking, the hydraulic braking module to be in a second state to perform braking using hydraulic braking torque.

In the control system for braking backup in autonomous driving according to an embodiment of the invention or any of the above embodiments, the assignment unit is further configured to instruct, in response to the received status indication of the execution module associated with braking, the hydraulic braking module to be in a third state to perform braking using negative motor torque, where dynamic clamping braking torque is used for the braking when the negative motor torque is insufficient.

In the control system for braking backup in autonomous driving according to an embodiment of the invention or any of the above embodiments, the stability control unit is further configured to instruct, in response to the received status indication of the execution module associated with braking, the hydraulic braking module to be in a first state to control hydraulic braking torque and negative motor torque using the function module associated with stability control in the hydraulic braking module.

In the control system for braking backup in autonomous driving according to an embodiment of the invention or any of the above embodiments, the stability control unit is further configured to instruct, in response to the received status indication of the execution module associated with braking, the hydraulic braking module to be in a second state to control hydraulic braking torque using the function module associated with stability control in a vehicle control unit.

In the control system for braking backup in autonomous driving according to an embodiment of the invention or any of the above embodiments, the stability control unit is further configured to instruct, in response to the received status indication of the execution module associated with braking, the hydraulic braking module to be in a third state to control negative motor torque and an anti-lock sub-module in an electronic parking module using the function module associated with stability control in a vehicle control unit.

According to a third aspect of the invention, there is provided a computer storage medium including instructions, where when the instructions are run, the steps of the control method for braking backup in autonomous driving according to the first aspect of the invention are performed.

According to a fourth unclaimed aspect, there is provided a computer device including a memory, a processor, and a computer program stored on the memory and executable on the processor, where when the processor executes the computer program, the steps of the control method for braking backup in autonomous driving according to the first aspect of the invention are implemented.

According to a fifth unclaimed aspect, there is provided a vehicle including the control system for braking backup in autonomous driving according to the second aspect of the invention.

According to the control solutions for braking backup in autonomous driving in one or more embodiments of the invention, braking redundancy can be provided for an autonomous vehicle when the autonomous vehicle is braked, braking stability can be ensured, and a braking failure rate can be reduced, thereby improving safety performance of a braking system in autonomous driving.

### Brief Description of the Drawings

The above-mentioned and/or other aspects and advantages of the invention will become more apparent and more readily appreciated from the following description of various aspects in conjunction with the accompanying drawings, in which the same or similar units are denoted by the same reference numerals. In the accompanying drawings:
FIG. 1 is a flowchart of a control method for braking backup in autonomous driving according to an embodiment of the invention;
FIG. 2 is a schematic diagram of a control system for braking backup in autonomous driving according to an embodiment of the invention; and
FIG. 3 is a block diagram of a computer device according to an embodiment of the invention.

### Detailed Description of Embodiments

The following descriptions of the specific embodiments are merely exemplary in nature, and are not intended to limit the disclosed technologies or the application and use of the disclosed technologies. In addition, there is no intention to be bound by any expressed or implied theory presented in the foregoing Technical Field and Background Art, or the following Detailed Description.

In the following detailed descriptions of the embodiments, many specific details are set forth to provide a more thorough understanding of the disclosed technologies. However, it is obvious for those of ordinary skill in the art that the disclosed technologies may be practiced without these specific details. In other instances, well-known features are not detailed, to avoid complicating the descriptions unnecessarily.

The terms such as "include" and "comprise" are used to indicate that in addition to the units and steps that are directly and clearly described in this specification, other units and steps that are not directly or clearly described are not excluded in the technical solutions of the invention. The terms such as "first" and "second" are not used to indicate sequences of units in terms of time, space, size, etc., and are merely used to distinguish between the units.

It should be noted that, in the context of the invention, the terms such as "execution module associated with braking" includes, but is not limited to, a hydraulic braking module, a motor torque response module, and an electronic parking module. The term "function module associated with stability control" includes, but is not limited to, an anti-lock (ABS) module, a dragging torque control (DTC) module, and a dynamic clamping (RWU) function module.

Various exemplary embodiments according to the invention will be described below in detail with reference to the accompanying drawings.

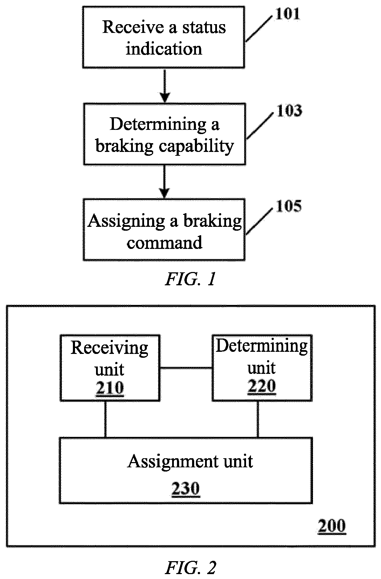

FIG. 1 is a flowchart of a control method for braking backup in autonomous driving according to an embodiment of the invention.

As shown in FIG. 1, in step 101, a status indication of an execution module associated with braking and a status indication of a function module associated with stability control are received.

In an embodiment, the status indication of the execution module associated with braking may include, but is not limited to, a motor status indication, a braking torque status indication, and an electronic parking status indication, where the motor status indication, the braking torque status indication, and the electronic parking status indication may indicate whether the corresponding execution module associated with braking is in a normal state, a degraded state, or a failure state. In an embodiment, the status indication of the function module associated with stability control may include, but is not limited to, an anti-lock (ABS) module status indication, a dragging torque control (DTC) module status indication, and a dynamic clamping (RWU) function module status indication, where the anti-lock (ABS) module status indication, the dragging torque control (DTC) module status indication, and the dynamic clamping (RWU) function module status indication may indicate whether the corresponding function module associated with stability control is in a normal state, a degraded state, or a failure state. It can be understood that the status indication of the execution module associated with braking and the status indication of the function module associated with stability control above may be respectively reported by the execution module associated with braking and the function module associated with stability control periodically to represent respective states thereof.

In an embodiment, the status indication of the execution module associated with braking, the status indication of the function module associated with stability control, and status indications of various sensors in autonomous driving are received to determine whether the execution module associated with braking, the function module associated with stability control, and the various sensors in autonomous driving are available. As an example, the sensors may include, but are not limited to, a wheel speed sensor, an inertial sensor, a pressure sensor, a motor wheel speed sensor, an actual motor torque estimation module, and a battery charging limit estimation module.

In step 103, a braking capability of the execution module associated with braking is determined based at least in part on the received status indication of the execution module associated with braking and the received status indication of the function module associated with stability control, where the determined braking capability of the execution module associated with braking includes, but is not limited to, a hydraulic braking torque capability, a negative motor torque capability, and dynamic clamping braking torque.

In step 105, a braking command is assigned based at least in part on the received status indication of the execution module associated with braking and the determined braking capability of the execution module associated with braking.

In an embodiment, the hydraulic braking module is instructed, in response to the received status indication of the execution module associated with braking, to be in the normal state to perform braking using negative motor torque, where hydraulic braking torque is used for the braking when the negative motor torque is insufficient. In another embodiment, the hydraulic braking module is instructed, in response to the received status indication of the execution module associated with braking, to be in the degraded state (for example, a braking capability of the hydraulic braking module is lower than a preset braking capability threshold) to perform braking using hydraulic braking torque. It can be understood that when the hydraulic braking torque used for braking is insufficient, the hydraulic braking module reports a fault to a vehicle control unit, such that the vehicle control unit can deal with the situation that the hydraulic braking torque is insufficient in a timely manner. In still another embodiment, the hydraulic braking module is instructed, in response to the received status indication of the execution module associated with braking, to be in the failure state to perform braking using negative motor torque, where dynamic clamping braking torque is used for the braking when the negative motor torque is insufficient. It can be understood that when the dynamic clamping braking torque used for braking is insufficient, the dynamic clamping function module reports a fault to a vehicle control unit, such that the vehicle control unit can deal with the situation that the dynamic clamping braking torque is insufficient in a timely manner.

In an embodiment, various braking lines in a braking system (for example, a negative motor torque braking line, a hydraulic braking line, and a dynamic clamping braking line) are configured to perform braking control separately in response to receiving the assigned braking command, such that braking force can be ensured not to be lost under the states of the hydraulic braking module, thereby improving the safety and flexibility of the braking system.

Braking commands in the autonomous driving function are assigned, based at least in part on the status indication of the execution module associated with braking and the braking capability of the execution module associated with braking, according to the priority described in step 105 above, so that additional braking redundancy can be provided when an autonomous vehicle is braked, thereby improving the safety of the braking system. In addition, the braking lines (for example, the negative motor torque braking line, the hydraulic braking line, and the dynamic clamping braking line) in the braking system can be controlled completely independently of each other, thereby further improving the flexibility and safety of the braking system.

Optionally, vehicle stability control may be performed based at least in part on the received status indication of the execution module associated with braking (not shown in FIG. 1). In an embodiment, the hydraulic braking module is instructed, in response to the received status indication of the execution module associated with braking, to be in the normal state to control hydraulic braking torque and negative motor torque using the function module (for example, using an ABS module) associated with stability control in the hydraulic braking module, so as to prevent vehicle wheels from being locked. In another embodiment, the hydraulic braking module is instructed, in response to the received status indication of the execution module associated with braking, to be in the degraded state (for example, a braking capability of the hydraulic braking module is lower than a preset braking capability threshold) to control hydraulic braking torque using the function module (for example, using an ABS module in a vehicle control unit) associated with stability control in the vehicle control unit, so as to prevent vehicle wheels from being locked. In still another embodiment, the hydraulic braking module is instructed, in response to the received status indication of the execution module associated with braking, to be in the failure state to control negative motor torque and an anti-lock sub-module in an electronic parking module using the function module (for example, using a DTC module in a vehicle control unit) associated with stability control in the vehicle control unit, so as to prevent vehicle wheels from being locked.

According to the control method for braking backup in autonomous driving proposed in an aspect of the invention, additional braking redundancy can be provided for an autonomous vehicle when the autonomous vehicle is braked, braking stability can be ensured, and a braking failure rate can be reduced, thereby improving safety performance of a braking system in autonomous driving.

FIG. 2 is a schematic diagram of a control system for braking backup in autonomous driving according to an embodiment of the invention.

As shown in FIG. 2, the control system 200 for braking backup in autonomous driving includes a receiving unit 210, a determining unit 220, and an assignment unit 230.

The receiving unit 210 is configured to receive a status indication of an execution module associated with braking and a status indication of a function module associated with stability control.

In an embodiment, the status indication of the execution module associated with braking may include, but is not limited to, a motor status indication, a braking torque status indication, and an electronic parking status indication, where the motor status indication, the braking torque status indication, and the electronic parking status indication may indicate whether the corresponding execution module associated with braking is in a normal state, a degraded state, or a failure state. In an embodiment, the status indication of the function module associated with stability control may include, but is not limited to, an anti-lock (ABS) module status indication, a dragging torque control (DTC) module status indication, and a dynamic clamping (RWU) function module status indication, where the anti-lock (ABS) module status indication, the dragging torque control (DTC) module status indication, and the dynamic clamping (RWU) function module status indication may indicate whether the corresponding function module associated with stability control is in a normal state, a degraded state, or a failure state. It can be understood that the status indication of the execution module associated with braking and the status indication of the function module associated with stability control above may be respectively reported by the execution module associated with braking and the function module associated with stability control periodically to represent respective states thereof.

In an embodiment, the receiving unit 210 is configured to receive the status indication of the execution module associated with braking, the status indication of the function module associated with stability control, and status indications of various sensors in autonomous driving, so that the determining unit 220 determines whether the execution module associated with braking, the function module associated with stability control, and the various sensors in autonomous driving are available. As an example, the sensors may include, but are not limited to, a wheel speed sensor, an inertial sensor, a pressure sensor, a motor wheel speed sensor, an actual motor torque estimation module, and a battery charging limit estimation module.

The determining unit 220 is configured to determine a braking capability of the execution module associated with braking based at least in part on the received status indication of the execution module associated with braking and the received status indication of the function module associated with stability control, where the determined braking capability of the execution module associated with braking includes, but is not limited to, a hydraulic braking torque capability, a negative motor torque capability, and dynamic clamping braking torque.

The assignment unit 230 is configured to assign a braking command based at least in part on the received status indication of the execution module associated with braking and the determined braking capability of the execution module associated with braking.

In an embodiment, the assignment unit 230 is configured to instruct, in response to the received status indication of the execution module associated with braking, the hydraulic braking module to be in the normal state to perform braking using negative motor torque, where hydraulic braking torque is used for the braking when the negative motor torque is insufficient. In another embodiment, the assignment unit 230 is configured to instruct, in response to the received status indication of the execution module associated with braking, the hydraulic braking module to be in the degraded state (for example, a braking capability of the hydraulic braking module is lower than a preset braking capability threshold) to perform braking using hydraulic braking torque. It can be understood that when the hydraulic braking torque used for braking is insufficient, the hydraulic braking module reports a fault to a vehicle control unit, such that the vehicle control unit can deal with the situation that the hydraulic braking torque is insufficient in a timely manner. In still another embodiment, the assignment unit 230 is configured to instruct, in response to the received status indication of the execution module associated with braking, the hydraulic braking module to be in the failure state to perform braking using negative motor torque, where dynamic clamping braking torque is used for the braking when the negative motor torque is insufficient. It can be understood that when the dynamic clamping braking torque used for braking is insufficient, the dynamic clamping function module reports a fault to a vehicle control unit, such that the vehicle control unit can deal with the situation that the dynamic clamping braking torque is insufficient in a timely manner.

In an embodiment, various braking lines in a braking system (for example, a negative motor torque braking line, a hydraulic braking line, and a dynamic clamping braking line) are configured to perform braking control separately in response to receiving the braking command assigned by the assignment unit 230, such that braking force can be ensured not to be lost under states of the hydraulic braking module, thereby improving the safety and flexibility of the braking system.

The assignment unit 230 is configured to assign, based at least in part on the status indication of the execution module associated with braking and the braking capability of the execution module associated with braking, braking commands in the autonomous driving function according to the priority described above, so that additional braking redundancy can be provided when an autonomous vehicle is braked, thereby improving the safety of the braking system. In addition, the braking lines (for example, the negative motor torque braking line, the hydraulic braking line, and the dynamic clamping braking line) in the braking system can be controlled completely independently of each other, thereby further improving the flexibility and safety of the braking system.

Optionally, the control system 200 for braking backup in autonomous driving may further include a stability control unit (not shown in FIG. 2), where the stability control unit is configured to perform vehicle stability control based at least in part on the received status indication of the execution module associated with braking. In an embodiment, the stability control unit is configured to instruct, in response to the received status indication of the execution module associated with braking, the hydraulic braking module to be in the normal state to control hydraulic braking torque and negative motor torque using the function module (for example, using an ABS module) associated with stability control in the hydraulic braking module, so as to prevent vehicle wheels from being locked. In another embodiment, the stability control unit is configured to instruct, in response to the received status indication of the execution module associated with braking, the hydraulic braking module to be in the degraded state (for example, a braking capability of the hydraulic braking module is lower than a preset braking capability threshold) to control hydraulic braking torque using the function module (for example, using an ABS module in a vehicle control unit) associated with stability control in the vehicle control unit, so as to prevent vehicle wheels from being locked. In still another embodiment, the stability control unit is configured to instruct, in response to the received status indication of the execution module associated with braking, the hydraulic braking module to be in the failure state to control negative motor torque and an anti-lock sub-module in an electronic parking module using the function module (for example, using a DTC module in a vehicle control unit) associated with stability control in the vehicle control unit, so as to prevent vehicle wheels from being locked.

According to the control system for braking backup in autonomous driving proposed in an aspect of the invention, additional braking redundancy can be provided for an autonomous vehicle when the autonomous vehicle is braked, braking stability can be ensured, and a braking failure rate can be reduced, thereby improving safety performance of a braking system in autonomous driving.

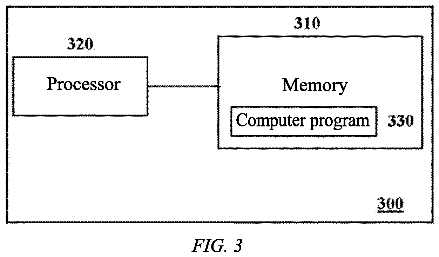

FIG. 3 is a block diagram of a computer device according to an embodiment of the invention. As shown in FIG. 3, a computer device 300 includes a memory 310, a processor 320, and a computer program 330 stored on the memory 310 and executable on the processor 320. The processor 320, when executing the computer program 330, implements the steps of the control method for braking backup in autonomous driving according to an aspect of the invention, for example, as shown in FIG. 1.

In addition, as described above, the invention may also be implemented as a computer storage medium, which has stored therein a program for causing a computer to perform the control method for braking backup in autonomous driving according to an aspect of the invention.

Here, various forms of computer storage media, such as disks (for example, a magnetic disk, an optical disc, etc.), cards (for example, a memory card, an optical card, etc.), semiconductor memories (for example, a ROM, a non-volatile memory, etc.), and tapes (for example, a magnetic tape, a cassette tape, etc.) may be used as the computer storage medium.

Various embodiments provided in the invention may be implemented by hardware, software, or a combination of hardware and software where applicable. In addition, without departing from the scope of the invention, various hardware components and/or software components described in this specification may be combined into a combined component including software, hardware, and/or both where applicable. Without departing from the scope of the invention, various hardware components and/or software components described in this specification may be separated into sub-components including software, hardware, or both where applicable. In addition, where applicable, it is contemplated that software components may be implemented as hardware components, and vice versa.

Software (such as program code and/or data) in the invention may be stored on one or more computer storage media. It is also contemplated that the software identified herein may be implemented using one or more general-purpose or special-purpose computers and/or computer systems, networked and/or otherwise. The steps described herein may be changed in order, combined into compound steps, and/or divided into sub-steps where applicable, to provide the features described herein.

The embodiments and examples proposed herein are provided to describe as adequately as possible embodiments according to the invention and specific applications thereof and thus enable those skilled in the art to implement and use the invention. However, those skilled in the art will know that the above descriptions and examples are provided only for description and illustration. The proposed description is not intended to cover all aspects of the invention or limit the invention to the disclosed precise forms.

## Claims

1. A control method for braking backup in autonomous driving, comprising:
receiving a status indication of an execution module associated with braking and a status indication of a function module associated with stability control;
determining, based at least in part on the received status indication of the execution module associated with braking and the received status indication of the function module associated with stability control, a braking capability of the execution module associated with braking; and
assigning a braking command based at least in part on the received status indication of the execution module associated with braking and the determined braking capability of the execution module associated with braking.

2. The method according to claim 1, further comprising:
performing vehicle stability control based at least in part on the received status indication of the execution module associated with braking.

3. The method according to claim 1 or 2, wherein the execution module associated with braking comprises one or more of the following: a hydraulic braking module, a motor torque response module, and an electronic parking module.

4. The method according to any one of claims 1 to 3, wherein the determined braking capability of the execution module associated with braking comprises one or more of the following: a hydraulic braking torque capability, a negative motor torque capability, and dynamic clamping braking torque.

5. The method according to any one of claims 1 to 4, wherein the assigning the braking command based at least in part on the received status indication of the execution module associated with braking and the determined braking capability of the execution module associated with braking further comprises:
instructing, in response to the received status indication of the execution module associated with braking, the hydraulic braking module to be in a first state to perform braking using negative motor torque, wherein hydraulic braking torque is used for the braking when the negative motor torque is insufficient.

6. The method according to any one of claims 1 to 5, wherein the assigning the braking command based at least in part on the received status indication of the execution module associated with braking and the determined braking capability of the execution module associated with braking further comprises:
instructing, in response to the received status indication of the execution module associated with braking, the hydraulic braking module to be in a second state to perform braking using hydraulic braking torque.

7. The method according to any one of claims 1 to 6, wherein the assigning the braking command based at least in part on the received status indication of the execution module associated with braking and the determined braking capability of the execution module associated with braking further comprises:
instructing, in response to the received status indication of the execution module associated with braking, the hydraulic braking module to be in a third state to perform braking using negative motor torque, wherein dynamic clamping braking torque is used for the braking when the negative motor torque is insufficient.

8. The method according to any one of claims 2 to 7, wherein the performing vehicle stability control based at least in part on the received status indication of the execution module associated with braking further comprises:
instructing, in response to the received status indication of the execution module associated with braking, a hydraulic braking module to be in a first state to control hydraulic braking torque and negative motor torque using the function module associated with stability control in the hydraulic braking module.

9. The method according to any one of claims 2 to 8, wherein the performing vehicle stability control based at least in part on the received status indication of the execution module associated with braking further comprises:
instructing, in response to the received status indication of the execution module associated with braking, a hydraulic braking module to be in a second state to control hydraulic braking torque using the function module associated with stability control in a vehicle control unit.

10. The method according to any one of claims 2 to 9, wherein the performing vehicle stability control based at least in part on the received status indication of the execution module associated with braking further comprises:
instructing, in response to the received status indication of the execution module associated with braking, a hydraulic braking module to be in a third state to control negative motor torque and an anti-lock sub-module in an electronic parking module using the function module associated with stability control in a vehicle control unit.

11. A control system for braking backup in autonomous driving, being adapted to perform the method of any one of claims 1 to 10, the control system comprising:
a receiving unit configured to receive a status indication of an execution module associated with braking and a status indication of a function module associated with stability control;
a determining unit configured to determine, based at least in part on the received status indication of the execution module associated with braking and the received status indication of the function module associated with stability control, a braking capability of the execution module associated with braking; and
an assignment unit configured to assign a braking command based at least in part on the received status indication of the execution module associated with braking and the determined braking capability of the execution module associated with braking.

12. The system according to claim 11, further comprising:
a stability control unit configured to perform vehicle stability control based at least in part on the received status indication of the execution module associated with braking.

13. The system according to claim 11 or 12, wherein the assignment unit is further configured to:
instruct, in response to the received status indication of the execution module associated with braking, a hydraulic braking module to be in a first state to perform braking using negative motor torque, wherein hydraulic braking torque is used for the braking when the negative motor torque is insufficient; and/or
wherein the assignment unit is further configured to:
instruct, in response to the received status indication of the execution module associated with braking, a hydraulic braking module to be in a second state to perform braking using hydraulic braking torque; and/or
wherein the assignment unit is further configured to:
instruct, in response to the received status indication of the execution module associated with braking, a hydraulic braking module to be in a third state to perform braking using negative motor torque, where dynamic clamping braking torque is used for the braking when the negative motor torque is insufficient.

14. The system according to any one of claims 12 to 13, wherein the stability control unit is further configured to:
instruct, in response to the received status indication of the execution module associated with braking, a hydraulic braking module to be in a first state to control hydraulic braking torque and negative motor torque using the function module associated with stability control in the hydraulic braking module; and/or
wherein the stability control unit is further configured to:
instruct, in response to the received status indication of the execution module associated with braking, a hydraulic braking module to be in a second state to control hydraulic braking torque using the function module associated with stability control in a vehicle control unit; and/or
wherein the stability control unit is further configured to:
instruct, in response to the received status indication of the execution module associated with braking, a hydraulic braking module to be in a third state to control negative motor torque and an anti-lock sub-module in an electronic parking module using the function module associated with stability control in a vehicle control unit.

15. A computer storage medium comprising instructions, wherein when the instructions are run, the method according to any one of claims 1 to 10 is performed.

## Patentansprüche

1. Steuerungsverfahren zur Bremssicherung beim autonomen Fahren, aufweisend:
Empfangen einer Statusanzeige eines dem Bremsen zugeordneten Ausführungsmoduls und einer Statusanzeige eines der Stabilitätskontrolle zugeordneten Funktionsmoduls;
Bestimmen, mindestens zum Teil basierend auf der empfangenen Statusanzeige des dem Bremsen zugeordneten Ausführungsmoduls und der empfangenen Statusanzeige des der Stabilitätskontrolle zugeordneten Funktionsmoduls, einer Bremsfähigkeit des dem Bremsen zugeordneten Ausführungsmoduls; und
Zuweisen eines Bremsbefehls mindestens zum Teil basierend auf der empfangenen Statusanzeige des dem Bremsen zugeordneten Ausführungsmoduls und der bestimmten Bremsfähigkeit des dem Bremsen zugeordneten Ausführungsmoduls.

2. Verfahren nach Anspruch 1, ferner aufweisend:
Durchführen einer Fahrzeugstabilitätskontrolle mindestens zum Teil basierend auf der empfangenen Statusanzeige des dem Bremsen zugeordneten Ausführungsmoduls.

3. Verfahren nach Anspruch 1 oder 2, wobei das dem Bremsen zugeordnete Ausführungsmodul eines oder mehrere von Folgendem aufweist: einem hydraulischen Bremsmodul, einem Motormomentreaktionsmodul und einem elektronischen Parkmodul.

4. Verfahren nach einem der Ansprüche 1 bis 3, wobei die bestimmte Bremsfähigkeit des dem Bremsen zugeordneten Ausführungsmoduls eines oder mehrere von Folgendem aufweist: einer Fähigkeit zu einem hydraulischen Bremsmoment, einer Fähigkeit zu einem negativen Motormoment und einem Bremsmoment einer dynamischen Blockierung.

5. Verfahren nach einem der Ansprüche 1 bis 4, wobei das Zuweisen des Bremsbefehls mindestens zum Teil basierend auf der empfangenen Statusanzeige des dem Bremsen zugeordneten Ausführungsmoduls und der bestimmten Bremsfähigkeit des dem Bremsen zugeordneten Ausführungsmoduls ferner Folgendes aufweist:
Anweisen, als Reaktion auf die empfangene Statusanzeige des dem Bremsen zugeordneten Ausführungsmoduls, des hydraulischen Bremsmoduls dazu, dass es in einem ersten Zustand ist, um eine Bremsung unter Nutzung eines negativen Motormoments durchzuführen, wobei für die Bremsung ein hydraulisches Bremsmoment genutzt wird, wenn das negative Motormoment nicht ausreichend ist.

6. Verfahren nach einem der Ansprüche 1 bis 5, wobei das Zuweisen des Bremsbefehls mindestens zum Teil basierend auf der empfangenen Statusanzeige des dem Bremsen zugeordneten Ausführungsmoduls und der bestimmten Bremsfähigkeit des dem Bremsen zugeordneten Ausführungsmoduls ferner Folgendes aufweist:
Anweisen, als Reaktion auf die empfangene Statusanzeige des dem Bremsen zugeordneten Ausführungsmoduls, des hydraulischen Bremsmoduls dazu, dass es in einem zweiten Zustand ist, um eine Bremsung unter Nutzung eines hydraulischen Bremsmoments durchzuführen.

7. Verfahren nach einem der Ansprüche 1 bis 6, wobei das Zuweisen des Bremsbefehls mindestens zum Teil basierend auf der empfangenen Statusanzeige des dem Bremsen zugeordneten Ausführungsmoduls und der bestimmten Bremsfähigkeit des dem Bremsen zugeordneten Ausführungsmoduls ferner Folgendes aufweist:
Anweisen, als Reaktion auf die empfangene Statusanzeige des dem Bremsen zugeordneten Ausführungsmoduls, des hydraulischen Bremsmoduls dazu, dass es in einem dritten Zustand ist, um eine Bremsung unter Nutzung eines negativen Motormoments durchzuführen, wobei für die Bremsung ein Bremsmoment einer dynamischen Blockierung genutzt wird, wenn das negative Motormoment nicht ausreichend ist.

8. Verfahren nach einem der Ansprüche 2 bis 7, wobei das Durchführen einer Fahrzeugstabilitätskontrolle mindestens zum Teil basierend auf der empfangenen Statusanzeige des dem Bremsen zugeordneten Ausführungsmoduls ferner Folgendes aufweist:
Anweisen, als Reaktion auf die empfangene Statusanzeige des dem Bremsen zugeordneten Ausführungsmoduls, eines hydraulischen Bremsmoduls dazu, dass es in einem ersten Zustand ist, um ein hydraulisches Bremsmoment und ein negatives Motormoment unter Nutzung des der Stabilitätskontrolle zugeordneten Funktionsmoduls in dem hydraulischen Bremsmodul zu steuern.

9. Verfahren nach einem der Ansprüche 2 bis 8, wobei das Durchführen einer Fahrzeugstabilitätskontrolle mindestens zum Teil basierend auf der empfangenen Statusanzeige des dem Bremsen zugeordneten Ausführungsmoduls ferner Folgendes aufweist:
Anweisen, als Reaktion auf die empfangene Statusanzeige des dem Bremsen zugeordneten Ausführungsmoduls, eines hydraulischen Bremsmoduls dazu, dass es in einem zweiten Zustand ist, um ein hydraulisches Bremsmoment unter Nutzung des der Stabilitätskontrolle zugeordneten Funktionsmoduls in einer Fahrzeugsteuereinheit zu steuern.

10. Verfahren nach einem der Ansprüche 2 bis 9, wobei das Durchführen einer Fahrzeugstabilitätskontrolle mindestens zum Teil basierend auf der empfangenen Statusanzeige des dem Bremsen zugeordneten Ausführungsmoduls ferner Folgendes aufweist:
Anweisen, als Reaktion auf die empfangene Statusanzeige des dem Bremsen zugeordneten Ausführungsmoduls, eines hydraulischen Bremsmoduls dazu, dass es in einem dritten Zustand ist, um ein negatives Motormoment und ein Antiblockier-Submodul in einem elektronischen Parkmodul unter Nutzung des der Stabilitätskontrolle zugeordneten Funktionsmoduls in einer Fahrzeugsteuereinheit zu steuern.

11. Steuerungssystem zur Bremssicherung beim autonomen Fahren, das dazu ausgelegt ist, das Verfahren nach einem der Ansprüche 1 bis 10 durchzuführen, wobei das Steuerungssystem Folgendes aufweist:
eine Empfangseinheit, die konfiguriert ist, um eine Statusanzeige eines dem Bremsen zugeordneten Ausführungsmoduls und eine Statusanzeige eines der Stabilitätskontrolle zugeordneten Funktionsmoduls zu empfangen;
eine Bestimmungseinheit, die konfiguriert ist, um mindestens zum Teil basierend auf der empfangenen Statusanzeige des dem Bremsen zugeordneten Ausführungsmoduls und der empfangenen Statusanzeige des der Stabilitätskontrolle zugeordneten Funktionsmoduls eine Bremsfähigkeit des dem Bremsen zugeordneten Ausführungsmoduls zu bestimmen; und
eine Zuweisungseinheit, die konfiguriert ist, um einen Bremsbefehl mindestens zum Teil basierend auf der empfangenen Statusanzeige des dem Bremsen zugeordneten Ausführungsmoduls und der bestimmten Bremsfähigkeit des dem Bremsen zugeordneten Ausführungsmoduls zuzuweisen.

12. System nach Anspruch 11, ferner aufweisend:
eine Stabilitätskontrolleinheit, die konfiguriert ist, um eine Fahrzeugstabilitätskontrolle mindestens zum Teil basierend auf der empfangenen Statusanzeige des dem Bremsen zugeordneten Ausführungsmoduls durchzuführen.

13. System nach Anspruch 11 oder 12, wobei die Zuweisungseinheit ferner für Folgendes konfiguriert ist:
Anweisen, als Reaktion auf die empfangene Statusanzeige des dem Bremsen zugeordneten Ausführungsmoduls, eines hydraulischen Bremsmoduls dazu, dass es in einem ersten Zustand ist, um eine Bremsung unter Nutzung eines negativen Motormoments durchzuführen, wobei für die Bremsung ein hydraulisches Bremsmoment genutzt wird, wenn das negative Motormoment nicht ausreichend ist; und/oder
wobei die Zuweisungseinheit ferner für Folgendes konfiguriert ist:
Anweisen, als Reaktion auf die empfangene Statusanzeige des dem Bremsen zugeordneten Ausführungsmoduls, eines hydraulischen Bremsmoduls dazu, dass es in einem zweiten Zustand ist, um eine Bremsung unter Nutzung eines hydraulischen Bremsmoments durchzuführen; und/oder
wobei die Zuweisungseinheit ferner für Folgendes konfiguriert ist:
Anweisen, als Reaktion auf die empfangene Statusanzeige des dem Bremsen zugeordneten Ausführungsmoduls, eines hydraulischen Bremsmoduls dazu, dass es in einem dritten Zustand ist, um eine Bremsung unter Nutzung eines negativen Motormoments durchzuführen, wobei für die Bremsung ein Bremsmoment einer dynamischen Blockierung genutzt wird, wenn das negative Motormoment nicht ausreichend ist.

14. System nach einem der Ansprüche 12 bis 13, wobei die Stabilitätskontrolleinheit ferner für Folgendes konfiguriert ist:
Anweisen, als Reaktion auf die empfangene Statusanzeige des dem Bremsen zugeordneten Ausführungsmoduls, eines hydraulischen Bremsmoduls dazu, dass es in einem ersten Zustand ist, um ein hydraulisches Bremsmoment und ein negatives Motormoment unter Nutzung des der Stabilitätskontrolle zugeordneten Funktionsmoduls in dem hydraulischen Bremsmodul zu steuern; und/oder
wobei die Stabilitätskontrolleinheit ferner für Folgendes konfiguriert ist:
Anweisen, als Reaktion auf die empfangene Statusanzeige des dem Bremsen zugeordneten Ausführungsmoduls, eines hydraulischen Bremsmoduls dazu, dass es in einem zweiten Zustand ist, um ein hydraulisches Bremsmoment unter Nutzung des der Stabilitätskontrolle zugeordneten Funktionsmoduls in einer Fahrzeugsteuereinheit zu steuern; und/oder
wobei die Stabilitätskontrolleinheit ferner für Folgendes konfiguriert ist:
Anweisen, als Reaktion auf die empfangene Statusanzeige des dem Bremsen zugeordneten Ausführungsmoduls, eines hydraulischen Bremsmoduls dazu, dass es in einem dritten Zustand ist, um ein negatives Motormoment und ein Antiblockier-Submodul in einem elektronischen Parkmodul unter Nutzung des der Stabilitätskontrolle zugeordneten Funktionsmoduls in einer Fahrzeugsteuereinheit zu steuern.

15. Computerspeichermedium, das Anweisungen aufweist, wobei, wenn die Anweisungen ausgeführt werden, das Verfahren nach einem der Ansprüche 1 bis 10 durchgeführt wird.

## Revendications

1. Procédé de commande pour une aide au freinage dans une conduite autonome, comprenant :
la réception d'une indication d'état d'un module d'exécution associé au freinage et d'une indication d'état d'un module de fonction associé au contrôle de la stabilité ;
la détermination, en se basant au moins en partie sur l'indication d'état reçue du module d'exécution associé au freinage et sur l'indication d'état reçue du module de fonction associé au contrôle de la stabilité, d'une capacité de freinage du module d'exécution associé au freinage ; et
l'attribution d'une commande de freinage, en se basant au moins en partie sur l'indication d'état reçue du module d'exécution associé au freinage et sur la capacité de freinage déterminée du module d'exécution associé au freinage.

2. Procédé selon la revendication 1, comprenant en outre :
l'exécution du contrôle de la stabilité du véhicule en se basant au moins en partie sur l'indication d'état reçue du module d'exécution associé au freinage.

3. Procédé selon la revendication 1 ou 2, dans lequel le module d'exécution associé au freinage comprend un ou plusieurs des modules suivants : un module de freinage hydraulique, un module de réponse au couple moteur et un module de stationnement électronique.

4. Procédé selon l'une quelconque des revendications 1 à 3, dans lequel la capacité de freinage déterminée du module d'exécution associé au freinage comprend un ou plusieurs des paramètres suivants : une capacité de couple de freinage hydraulique, une capacité de couple moteur négatif, et un couple de freinage dynamique à serrage.

5. Procédé selon l'une quelconque des revendications 1 à 4, dans lequel l'attribution de la commande de freinage, en se basant au moins en partie sur l'indication d'état reçue du module d'exécution associé au freinage et sur la capacité de freinage déterminée du module d'exécution associé au freinage, comprend en outre :
la demande, en réponse à l'indication d'état reçue du module d'exécution associé au freinage, au module de freinage hydraulique d'être dans un premier état pour exécuter le freinage en utilisant le couple moteur négatif, le couple de freinage hydraulique étant utilisé pour le freinage lorsque le couple moteur négatif est insuffisant.

6. Procédé selon l'une quelconque des revendications 1 à 5, dans lequel l'attribution de la commande de freinage, en se basant au moins en partie sur l'indication d'état reçue du module d'exécution associé au freinage et sur la capacité de freinage déterminée du module d'exécution associé au freinage comprend en outre :
la demande, en réponse à l'indication d'état reçue du module d'exécution associé au freinage, au module de freinage hydraulique d'être dans un deuxième état pour exécuter le freinage en utilisant le couple de freinage hydraulique.

7. Procédé selon l'une quelconque des revendications 1 à 6, dans lequel l'attribution de la commande de freinage, en se basant au moins en partie sur l'indication d'état reçue du module d'exécution associé au freinage et sur la capacité de freinage déterminée du module d'exécution associé au freinage comprend en outre :
la demande, en réponse à l'indication d'état reçue du module d'exécution associé au freinage, au module de freinage hydraulique d'être dans un troisième état pour exécuter le freinage en utilisant le couple moteur négatif, le couple de freinage dynamique à serrage étant utilisé pour le freinage lorsque le couple moteur négatif est insuffisant.

8. Procédé selon l'une quelconque des revendications 2 à 7, dans lequel l'exécution du contrôle de la stabilité du véhicule en se basant au moins en partie sur l'indication d'état reçue du module d'exécution associé au freinage comprend en outre :
la demande, en réponse à l'indication d'état reçue du module d'exécution associé au freinage, à un module de freinage hydraulique d'être dans un premier état pour commander le couple de freinage hydraulique et le couple moteur négatif en utilisant le module de fonction associé au contrôle de la stabilité dans le module de freinage hydraulique.

9. Procédé selon l'une quelconque des revendications 2 à 8, dans lequel l'exécution du contrôle de la stabilité du véhicule en se basant au moins en partie sur l'indication d'état reçue du module d'exécution associé au freinage comprend en outre :
la demande, en réponse à l'indication d'état reçue du module d'exécution associé au freinage, à un module de freinage hydraulique d'être dans un deuxième état pour commander le couple de freinage hydraulique en utilisant le module de fonction associé au contrôle de la stabilité dans une unité de commande de véhicule.

10. Procédé selon l'une quelconque des revendications 2 à 9, dans lequel l'exécution du contrôle de la stabilité du véhicule en se basant au moins en partie sur l'indication d'état reçue du module d'exécution associé au freinage comprend en outre :
la demande, en réponse à l'indication d'état reçue du module d'exécution associé au freinage, à un module de freinage hydraulique d'être dans un troisième état pour commander le couple moteur négatif et un module secondaire d'antiblocage dans un module de stationnement électronique en utilisant le module de fonction associé au contrôle de la stabilité dans une unité de commande du véhicule.

11. Système de commande pour une aide au freinage dans une conduite autonome, adapté de façon à exécuter le procédé selon l'une quelconque des revendications 1 à 10, ce système de commande comprenant :
une unité de réception configurée de façon à recevoir une indication d'état d'un module d'exécution associé au freinage et une indication d'état d'un module de fonction associé au contrôle de la stabilité ;
une unité de détermination, configurée de façon à déterminer, en se basant au moins en partie sur l'indication d'état reçue du module d'exécution associé au freinage et sur l'indication d'état reçue du module de fonction associé au contrôle de la stabilité, une capacité de freinage du module d'exécution associé au freinage ; et
une unité d'attribution configurée de façon à attribuer une commande de freinage, en se basant au moins en partie sur l'indication d'état reçue du module d'exécution associé au freinage et sur la capacité de freinage déterminée du module d'exécution associé au freinage.

12. Système selon la revendication 11, comprenant en outre :
une unité de contrôle de la stabilité configurée de façon à exécuter un contrôle de la stabilité du véhicule en se basant au moins en partie sur l'indication d'état reçue du module d'exécution associé au freinage.

13. Système selon la revendication 11 ou 12, dans lequel l'unité d'attribution est configurée en outre de façon à :
demander, en réponse à l'indication d'état reçue du module d'exécution associé au freinage, à un module de freinage hydraulique d'être dans un premier état pour exécuter le freinage en utilisant le couple moteur négatif, le couple de freinage hydraulique étant utilisé pour le freinage lorsque le couple moteur négatif est insuffisant ; et/ou
l'unité d'attribution étant configurée en outre de façon à :
demander, en réponse à l'indication d'état reçue du module d'exécution associé au freinage, à un module de freinage hydraulique d'être dans un deuxième état pour exécuter le freinage en utilisant le couple de freinage hydraulique ; et/ou
l'unité d'attribution étant configurée en outre de façon à :
demander, en réponse à l'indication d'état reçue du module d'exécution associé au freinage, à un module de freinage hydraulique d'être dans un troisième état pour exécuter le freinage en utilisant le couple moteur négatif, le couple de freinage dynamique à serrage étant utilisé pour le freinage lorsque le couple moteur négatif est insuffisant.

14. Système selon l'une quelconque des revendications 12 à 13, dans lequel l'unité de contrôle de la stabilité est configurée en outre de façon à :
demander, en réponse à l'indication d'état reçue du module d'exécution associé au freinage, à un module de freinage hydraulique d'être dans un premier état pour commander le couple de freinage hydraulique et le couple moteur négatif en utilisant le module de fonction associé au contrôle de la stabilité dans le module de freinage hydraulique ; et ou
l'unité de contrôle de la stabilité étant configurée en outre de façon à :
demander, en réponse à l'indication d'état reçue du module d'exécution associé au freinage, à un module de freinage hydraulique d'être dans un deuxième état pour commander le couple de freinage hydraulique en utilisant le module de fonction associé au contrôle de la stabilité dans une unité de commande du véhicule ; et/ou
l'unité de contrôle de la stabilité étant configurée en outre de façon à :
demander, en réponse à l'indication d'état reçue du module d'exécution associé au freinage, à un module de freinage hydraulique d'être dans un troisième état pour commander le couple moteur négatif et un module secondaire d'antiblocage dans un module de stationnement électronique en utilisant le module de fonction associé au contrôle de la stabilité dans une unité de commande de véhicule.

15. Support de stockage informatique comprenant des instructions, le procédé selon l'une quelconque des revendications 1 à 11 étant exécuté lorsque ces instructions sont exécutées.
